# EUROPEAN PATENT APPLICATION

(11) **EP 4 750 182 A1**
(43) Date of publication of application: **27.05.2026**
(21) Application number: 23945460.6
(22) Date of filing: 19.07.2023
(51) Int. Cl.: H04W 72/00

(54) **COMMUNICATION METHOD, TERMINAL, NETWORK DEVICE AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/108223
(87) International publication number: WO 2025/015569

(57) **Abstract**

The embodiments of the present disclosure provide a communication method. The method is executed by a terminal. The method comprises: determining that resources in a first resource set overlap with subband full duplex (SBFD) time units, wherein the first resource set includes at least one first resource, and the first resource is a time-domain resource and/or a frequency-domain resource where a synchronization signal/PBCH block (SSB) is located. The embodiments of the present disclosure can improve the resource utilization efficiency.

## Description

### TECHNICAL FIELD

The present disclosure relates to the field of communication technology, and specifically to a communication method, a terminal, a network device, and a storage medium.

### BACKGROUND

In the wireless communication technology, there are downlink (DL) symbols, uplink (UL) symbols, flexible (F) symbols, and sub-band full duplex (SBFD) symbols. When one symbol contains both a DL sub-band and a UL sub-band in a frequency domain, the symbol can be called an SBFD symbol. Similarly, when one time slot contains multiple symbols, including at least one SBFD symbol, the time slot can be called an SBFD time slot.

### SUMMARY

Embodiments of the present disclosure provide a communication method, a terminal, a network device, and a storage medium.

According to a first aspect of the embodiments of the present disclosure, a communication method is provided. The method is performed by a user equipment (UE) and includes:
determining that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

According to a second aspect of the embodiments of the present disclosure, a communication method is provided. The method is performed by a network device and includes:
determining that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

According to a third aspect of the embodiments of the present disclosure, a communication method is provided. The method is performed by a communication system and includes:
sending, by a network device, first information to a user equipment (UE), in which the first information is used for the UE to determine that a resource in a first resource set overlaps with a sub-band full duplex (SBFD) time unit; and
receiving, by the UE, the first information.

According to a fourth aspect of the embodiments of the present disclosure, a UE is provided, including:
a processing module, configured to:
determine that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

According to a fifth aspect of the embodiments of the present disclosure, a network device is provided, including:
a processing module, configured to:
determine that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

According to a sixth aspect of the embodiments of the present disclosure, a communication system is provided, including: a UE and a network device. The UE is configured to perform any communication method performed by the UE, and the network device is configured to perform any communication method performed by the network device.

According to a seventh aspect of the embodiments of the present disclosure, a UE is provided, including:
one or more processors;
in which the UE is configured to any communication method performed by the UE.

According to an eighth aspect of the embodiments of the present disclosure, a network device is provided, including:
one or more processors;
in which the network device is configured to perform any communication method performed by the network device.

According to a ninth aspect of the embodiments of the present disclosure, a storage medium is provided. The storage medium stores instructions. When the instructions are executed on a communication device, the communication device is caused to perform the communication method described in the first aspect or the second aspect.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure and, together with the description, serve to explain the principles of the embodiments of the present disclosure.
FIG. 1a is a schematic diagram of a communication system according to an embodiment of the present disclosure;
FIG. 1b is a schematic diagram of a time-frequency resource according to an embodiment of the present disclosure;
FIG. 1c is a schematic diagram of a time-frequency resource according to an embodiment of the present disclosure;
FIG. 1d is a schematic diagram of a time-frequency resource according to an embodiment of the present disclosure;
FIG. 2a is a flowchart of a communication method according to an embodiment of the present disclosure;
FIG. 2b is a schematic diagram of a time-frequency domain resource according to an embodiment of the present disclosure;
FIG. 2c is a schematic diagram of a time-frequency domain resource according to an embodiment of the present disclosure;
FIG. 3a is a flowchart of a communication method according to an embodiment of the present disclosure;
FIG. 3b is a flowchart of a communication method according to an embodiment of the present disclosure;
FIG. 4a is a flowchart of a communication method according to an embodiment of the present disclosure;
FIG. 4b is a flowchart of a communication method according to an embodiment of the present disclosure;
FIG. 5a is a flowchart of a communication method according to an embodiment of the present disclosure;
FIG. 6a is a flowchart of a communication method according to an embodiment of the present disclosure;
FIG. 7a is a block diagram of a terminal according to an embodiment of the present disclosure;
FIG. 7b is a block diagram of a network device according to an embodiment of the present disclosure;
FIG. 8a is a block diagram of a UE according to an embodiment of the present disclosure; and
FIG. 8b is a block diagram of a communication device according to an embodiment of the present disclosure.

### DETAILED DESCRIPTION

Embodiments of the present disclosure provide a communication method, a terminal, a network device, and a storage medium.

According to a first aspect of embodiments of the present disclosure, a communication method is provided. The method is performed by a user equipment (UE) and includes:
determining that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

In the above embodiment, since the UE determines that the resource in the first resource set overlaps with the SBFD time unit, the US may receive the SSB on the SBFD time unit and perform uplink transmission on the SBFD time unit at the same time. Compared with the situation where only the SSB can be received on the SBFD time unit, the resource utilization efficiency can be improved.

In combination with some embodiments of the first aspect, in some embodiments, the method further includes at least one of:
determining, according to a predetermined protocol, that the resource in the first resource set is capable of overlapping with the SBFD time unit; or
receiving configuration information, and determining, according to the configuration information, that the resource in the first resource set is capable of overlapping with the SBFD time unit.

In the above embodiment, the UE may determine, according to a predetermined protocol rule or configuration information, that the resource in the first resource set can overlap with the SBFD time unit, so that the determination method is more flexible.

In combination with some embodiments of the first aspect, in some embodiments, the method further includes:
receiving first information;
in which the first information is configured to determine the first resource set, and a time domain position of the resource in the first resource set overlaps with the SBFD time unit.

In the above embodiment, since the first information may be used to determine the first resource set, and the time domain position of the resource in the first resource set overlaps with the SBFD time unit, after the UE receives the first information, the UE may use the resource in the first resource set to perform corresponding transmission operations.

In combination with some embodiments of the first aspect, in some embodiments, the method further includes:
receiving a first signaling, in which the first signaling indicates that a downlink (DL) time unit is configured as the SBFD time unit.

In the above embodiment, the downlink DL time unit may be configured as the SBFD time unit through the first signaling.

In combination with some embodiments of the first aspect, in some embodiments, the method includes at least one of:
not expecting that the SBFD time unit included in the at least one first resource is configured as an uplink (UL) time unit; or
not expecting that the at least one first resource includes the SBFD time unit and a non-SBFD time unit.

In the above embodiment, when the UE does not expect the SBFD time unit contained in the first resource to be configured as the UL time unit, the network device may not configure the SBFD time unit contained in the first resource as the uplink UL time unit; when the UE does not expect the first resource to include the SBFD time unit and the non-SBFD time unit, the network device may not configure the first resource to include the SBFD time unit and the non-SBFD time unit.

In combination with some embodiments of the first aspect, in some embodiments, not expecting that the SBFD time unit comprised in the at least one first resource is configured as the UL time unit includes:
not expecting to receive a second signaling, in which the second signaling is used to configure the SBFD time unit comprised in the at least one first resource as the UL time unit.

In the above embodiment, when the UE does not expect the second signaling, the network device may not use the second signaling to configure the SBFD time unit contained in the first resource as the UL time unit.

In combination with some embodiments of the first aspect, in some embodiments, the method further includes:
not expecting that a frequency domain resource of the at least one first resource overlaps with the SBFD time unit outside a DL transmission frequency domain range.

In the above embodiment, when the UE does not expect the frequency domain resource of the first resource to overlap with the SBFD time unit outside the DL transmission frequency domain range, the network device may not configure the frequency domain resource of the first resource to overlap with the SBFD time unit outside the DL transmission frequency domain range.

In combination with some embodiments of the first aspect, in some embodiments, not expecting that the frequency domain resource of the at least one first resource overlaps with the SBFD time unit outside the DL transmission frequency domain range includes:
determining that the at least one first resource includes the SBFD time unit, and not expecting that the frequency domain resource of the at least one first resource overlaps with the SBFD time unit outside the DL transmission frequency domain range.

In the above embodiment, when the first resource includes the SBFD time unit, if the UE does not expect the frequency domain resource of the first resource to overlap with the SBFD time unit outside the DL transmission frequency domain range, the network device may not configure the frequency domain resource of the first resource to overlap with the SBFD time unit outside the DL transmission frequency domain range.

In combination with some embodiments of the first aspect, in some embodiments, the first signaling is a semi-static signaling or a dynamic signaling, and/or the second signaling is a semi-static signaling or a dynamic signaling.

In combination with some embodiments of the first aspect, in some embodiments, the semi-static signaling is an SBFD symbol configuration signaling.

In combination with some embodiments of the first aspect, in some embodiments, the dynamic signaling is a downlink control information (DCI) signaling.

In combination with some embodiments of the first aspect, in some embodiments, the method includes:
determining a first type of SSB and a second type of SSB in the one or more SSBs;
in which the first type of SSB includes an SSB actually received among the one or more SSBs, and the second type of SSB includes an SSB among the one or more SSBs except the first type of SSB.

In the above embodiment, the SSBs may be classified into the first type of SSB and the second type of SSB, so that different operations may be performed for different types of SSBs.

In combination with some embodiments of the first aspect, in some embodiments, the method further includes at least one of:
receiving a third signaling, in which the third signaling is used to configure the first type of SSB; or
receiving a fourth signaling, in which the fourth signaling is used to configure the second type of SSB;
in which the third signaling and the fourth signaling are the same signaling or different signalings.

In the above embodiment, different types of SSB can be configured through the third signaling and the fourth signaling.

In combination with some embodiments of the first aspect, in some embodiments, for the first type of SSB, the method includes at least one of:
determining that the at least one first resource overlaps with a time unit for transmitting a UL signal, and cancelling sending the UL signal; or
determining that a time unit where the at least one first resource is located is the SBFD time unit and that the at least one first resource overlaps with a time unit for sending a UL signal, and sending the UL signal.

In the above embodiments, when it is determined that the first resource overlaps with the time unit for transmitting the uplink UL signal, the sending of the UL signal may be canceled; when it is determined that the time unit where the first resource is located is the SBFD time unit and the first resource overlaps with the time unit for sending the UL signal, the UL signal may be sent. In this way, in the case of resource overlap, the processing method of the UL signal is more flexible.

In combination with some embodiments of the first aspect, in some embodiments, the UL signal includes at least one of:
a physical uplink shared channel (PUSCH) signal;
a physical uplink control channel (PUCCH) signal;
a physical random access channel (PRACH) signal; or
a sounding reference signal (SRS).

In combination with some embodiments of the first aspect, in some embodiments, for the first type of SSB, the method further includes:
determining that a time unit where the at least one first resource is located is the SBFD time unit and that the at least one first resource overlaps with a time unit for sending a UL signal, and sending the UL signal.

In the above embodiment, when it is determined that the time unit where the first resource is located is the SBFD time unit and the first resource overlaps with the time unit for sending the UL signal, the UL signal may be sent.

**In** combination with some embodiments of the first aspect, in some embodiments, the method further includes:
determining that a time unit where the at least one first resource is located is the SBFD time unit and that the at least one first resource overlaps with a time unit for sending a UL signal, and sending the UL signal.

In the above embodiment, when the time unit where the first resource is located is the SBFD and the first resource overlaps with the time unit for sending the UL signal, the UL signal may be sent.

In combination with some embodiments of the first aspect, in some embodiments, sending the UL signal includes:
sending the UL signal based on a priority of the UL signal.

In the above embodiment, the UL signal may be sent based on the priority of the UL signal, so that the UL signal may be sent preferentially.

In combination with some embodiments of the first aspect, in some embodiments, sending the UL signal based on the priority of the UL signal includes:
sending a UL signal with a high priority, in which the UL with the high priority includes at least one of:
a UL signal indicated by DCI; or
a UL ultra-reliable and low-latency communication (URLLC) signal.

**In** the above embodiment, the UL signal with the high priority may be sent preferentially.

According to a second aspect of embodiments of the present disclosure, a communication method is provided. The method is performed by a network device and includes:
determining that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

In combination with some embodiments of the second aspect, in some embodiments, the method further includes:
sending configuration information;
**in** which the configuration information is used for a user equipment (UE) to determine that the resource in the first resource set is capable of overlapping with the SBFD time unit.

In combination with some embodiments of the second aspect, in some embodiments, the method further includes:
sending first information;
in which the first information is configured to determine the first resource set, and a time domain position of the resource in the first resource set overlaps with the SBFD time unit.

In combination with some embodiments of the second aspect, in some embodiments, the method further includes:
sending a first signaling, wherein the first signaling indicates that a downlink (DL) time unit is configured as the SBFD time unit.

In combination with some embodiments of the second aspect, in some embodiments, the first signaling is a semi-static signaling or a dynamic signaling.

In combination with some embodiments of the second aspect, in some embodiments, the semi-static signaling is an SBFD symbol configuration signaling.

In combination with some embodiments of the second aspect, in some embodiments, the dynamic signaling is a downlink control information (DCI) signaling.

In combination with some embodiments of the second aspect, in some embodiments, the method further includes at least one of:
sending a third signaling, wherein the third signaling is used to configure a first type of SSB; or
sending a fourth signaling, wherein the fourth signaling is used to configure a second type of SSB;
in which the third signaling and the fourth signaling are the same signaling or different signalings.

According to a third aspect of embodiments of the present disclosure, a communication method is provided. The method is performed by a communication system and includes:
sending, by a network device, first information to a user equipment (UE), in which the first information is used for the UE to determine that a resource in a first resource set overlaps with a sub-band full duplex (SBFD) time unit; and
receiving, by the UE, the first information.

According to a fourth aspect of embodiments of the present disclosure, a user equipment (UE) is provided, including:
a processing module, configured to:
determine that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

According to a fifth aspect of embodiments of the present disclosure, a network device is provided, including:
a processing module, configured to:
determine that a resource in a first resource set overlaps with a sub-band full duplex (SBFD) time unit;
in which the first resource set includes at least one first resource, and the at least one first resource is a time domain resource and/or a frequency domain resource where one or more synchronization signal and physical broadcast channel blocks (SSBs) are located.

According to a sixth aspect of embodiments of the present disclosure, a communication system is provided, including: a user equipment (UE) and a network device; in which the UE is configured to perform the communication method of alternative implementations of the first aspect, the network device is configured to perform the communication method of alternative implementations of the second aspect.

According to a seventh aspect of embodiments of the present disclosure, a user equipment (UE) is provided, including:
one or more processors;
in which the UE is configured to perform the communication method of the first aspect.

According to an eighth aspect of embodiments of the present disclosure, a network device is provided, including:
one or more processors;
in which the network device is configured to perform the communication method of the second aspect.

According to a ninth aspect of embodiments of the present disclosure, a storage medium for storing instructions is provided. When the instructions are executed on a communication device, the communication device is caused to perform the method described in alternative implementations of the first aspect or the second aspect.

According to a tenth aspect of the embodiments of the present disclosure, a program product is provided. When the program product is executed on a communication device, the communication device is caused to perform the method described in alternative implementations of the first aspect or the second aspect.

According to an eleventh aspect of the embodiments of the present disclosure, a computer program is provided. When the computer program is running on a computer, the computer is caused to perform the method described in alternative implementations of the first aspect or the second aspect.

According to a twelfth aspect of the embodiments of the present disclosure, a chip or chip system is provided. The chip or chip system includes a processing circuit configured to execute the method described in alternative implementations of the first aspect or the second aspect.

It can be understood that the above-mentioned UE, the storage medium, the program product, the computer program, and the chip or chip system are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose a communication method, a UE, a network device, and a storage medium. In some embodiments, the terms such as communication method, information processing method, information transmission method, etc. can be replaced with each other, and the terms such as communication system, information processing system, etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, optional implementations in a certain embodiment can be arbitrarily combined; in addition, respective embodiments can be arbitrarily combined, for example, some or all steps of different embodiments can be arbitrarily combined, and a certain embodiment can be arbitrarily combined with optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B...", "A and/or B...", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

**In** some embodiments, descriptions such as "A or B...", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

**In** some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "provide that...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

**In** some embodiments, the apparatus and the device can be interpreted as physical or virtual, and their names are not limited to the names recorded in the embodiments, which may be understood as "equipment", "device", "circuit", "network element", "node", "function", "unit", "section", "system", "network", "chip", "chip system", "entity", and "subject" in some cases.

**In** some embodiments, the term "network" can be understood as apparatuses included in the network, such as an access network device, a core network device or the like.

In some embodiments, "access network device (AN device)" can also called "radio access network device (RAN device)", "base station (BS)", "radio base station", "fixed station", and may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like in some embodiments.

**In** some embodiments, "terminal" or "terminal device" can also called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

**In** some embodiments, the acquisition of data, information, etc. may comply with the laws and regulations of the country where the data is obtained.

**In** some embodiments, data, information, etc. may be obtained with the user's consent.

**In** addition, each element, each row, or each column in the table of the embodiments of the present disclosure may be implemented as an independent embodiment, and the combination of any elements, any rows, or any columns may also be implemented as an independent embodiment.

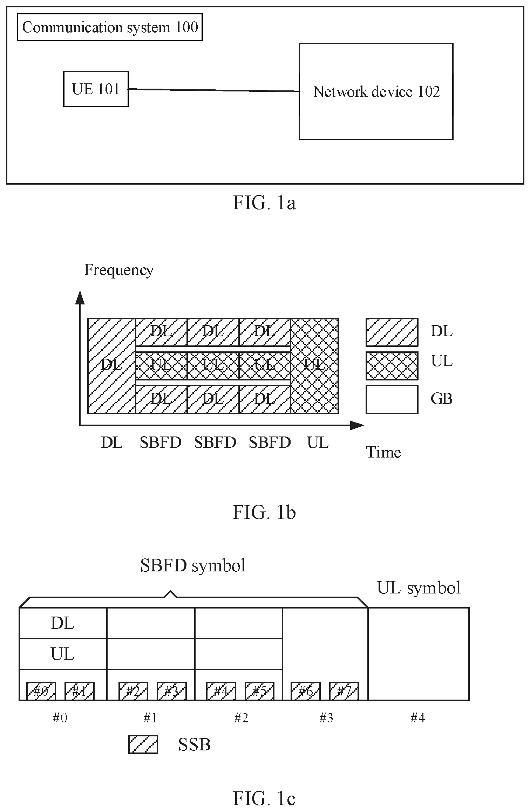

FIG. 1a is a schematic diagram of a communication system 100 according to an embodiment of the present disclosure.

As shown in FIG. 1a, the communication system 100 includes a terminal 101, and a network device 102.

**In** some embodiments, the network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, an access network device may be, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be one device, including one or more network elements, or may be a plurality of devices or a group of devices including all or part of the one or more network elements. The network element may be virtual or physical. The core network may include, for example, at least one of an Evolved Packet Core (EPC), a 5G Core Network (5GCN), or a Next Generation Core (NGC).

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1a, but are not limited thereto. The entities shown in FIG. 1a are examples, and the communication system may include all or part of the entities in FIG. 1a, or may include other entities other than those shown in FIG. 1a, and the number and form of the entities are arbitrary, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In order to better understand the embodiments of the present disclosure, the relevant scenarios will be described below for example.

In order to improve uplink (UL) coverage and throughput, duplex enhancement has been studied on sub-band full duplex (SBFD).

In some embodiments, one carrier component (CC) is divided into multiple sub-bands (SBs) within a frequency domain range on a downlink (DL) or flexible (F) symbol, and the multiple SBs include one UL sub-band and at least one (1 or 2) DL sub-bands. The base station may send a DL signal in the DL sub-band and receive a UL signal in the UL sub-band at the same time. The DL or F symbol may be configured in at least one of the following ways:
a TDD-UL-DL-ConfigCommon configuration;
a TDD-UL-DL-ConfigDedicated configuration;
TDD-UL-DL-ConfigCommon and TDD-UL-DL-ConfigDedicated configurations; or
a downlink control information format 2-0 (DCI format 2-0) indication.

When one symbol includes both a DL sub-band and a UL sub-band in the frequency domain, the symbol may be called an SBFD symbol.

In some embodiments, when multiple symbols contained in one time slot include at least one SBFD symbol, the time slot may be called an SBFD time slot. Referring to FIG. 1b, time slot 0 is a DL time slot, including 14 DL symbols, time slots 1 to 3 are SBFD time slots, each time slot includes 14 SBFD symbols, and time slot 4 is a UL time slot, including 14 UL symbols.

In some embodiments, one DL or F symbol may be configured as SBFD through a semi-static signaling, which may be called semi-static semi-SBFD. In addition, one DL or F symbol may be indicated as SBFD through a dynamic signaling, which may be called dynamic Dynamic-SBFD. In addition, one SBFD symbol may also be modified to a DL or UL or F symbol through a dynamic signaling.

In some embodiments, a guard band (GB) may exist between the DL sub-band and the UL sub-band to reduce interference between a DL signal in the DL sub-band and a UL signal in the UL sub-band through frequency domain isolation.

In some embodiments, in the SBFD symbol, the frequency domain range that can be used for DL transmission includes the following two cases: 1, the GB and the UL sub-band are not available for the DL transmission, and the DL sub-bands can be used for the DL transmission; 2, the UL sub-band is not available for the DL transmission, and the DL sub-band and GBs can be used for the DL transmission.

In some embodiments, in the SBFD symbol, the frequency domain range that can be used for the DL transmission may be referred to as a DL transmission frequency domain range, and the frequency domain range that cannot be used for the DL transmission may be referred to as outside the DL transmission frequency domain range. According to the above analysis, the DL transmission frequency domain ranges of non-SBFD symbols and SBFD symbols are different. The DL transmission frequency domain range is the DL transmission frequency domain range on the CC. In the SBFD symbol, the DL transmission frequency domain range on the DL bandwidth part (BWP) refers to a frequency domain range where the BWP overlaps with the DL transmission frequency domain range on the CC. Unless otherwise specified, the DL transmission frequency domain range in the present disclosure refers to the DL transmission frequency domain range on the BWP.

In some embodiments, when the terminal is in a radio resource control (RRC) idle state, an initial access cell may measure a received signal strength of a synchronization signal/PBCH block (SSB) beam and other information to select an optimal SSB beam. In the SBFD symbol, a base station may send downlink signals in the DL SB. Therefore, compared with a situation where the SSB can only be configured in the DL or F symbol, the situation where the SSB can be configured in the SBFD symbol may reduce limitations on the time domain configuration of the SBFD symbol.

In some embodiments, with reference to FIG. 1c, in one time slot, the first SSB uses OS#2~5 (such as SSB#0,2,4,6), and the second SSB uses OS#8~11 (such as SSB#1,3,5,7). When the SBFD symbol may be configured for the SSB, the SBFD may be configured in OS#2~5,8~11 of time slots #0~3, and the number of configurable time domain positions of the SBFD symbol increases.

However, in the relevant conflict handling criteria, the UE may cancel sending the UL signal when the SSB is in the symbol. When the SSB is in the SBFD symbol, the UL sub-band of the symbol where the SSB is located cannot be used for UL transmission, resulting in a waste of frequency domain resources in the UL sub-band. In addition, the conflict handling between the newly introduced SBFD symbol and the SSB is not considered. Therefore, it is required to update the conflict handling criteria for the SSB in the SBFD symbol.

In some embodiments, referring to Table 1, which shows the conflict handling methods of the SSB in different situations:

**Table 1**

| Method | Signal A | Signal type or Signal B | Behaviors | Detailed descriptions |
|---|---|---|---|---|
| Method 1 | SSB | Semi-U | Error | for a symbol where the SSB is located, the UE does not expect tdd-UL-DL-ConfigurationCommon or tdd-UL-DL-ConfigurationDedicated for configuring at least one signal thereof is UL |
| Method 2 | | SFI-U | Error | for valid RO and Ngap symbols preceding to the valid RO, the UE does not expect DCI format2-0 that includes a slot format indicator index (SFI-index) field indicating that at least one signal thereof is DL |
| Method 3 | | any-U (PUSCH, PUCCH, PRACH or SRS) | Drop D | for a symbol where the SSB is located, if a physical uplink shared channel (PUSCH), a physical uplink control channel (PUCCH) and a physical random access channel (PRACH) overlap with at least one symbol thereof, the UE cancels transmission of a UL signal; if a sounding reference signal (SRS) overlaps with the symbol where the SSB is located, the UE cancels transmission of the SSB signal. The UL signal (PUSCH, PUCCH, PRACH or SRS) is configured by RRC or indicated by DCI. |

In some embodiments, Dynamic D/U may refer to DL/UL transmission indicated by DCI; RRC-D/U may refer to DL/UL transmission configured by RRC. Any-D/U may be RRC-D or Dynamic-D; Semi-D/U may be configured as DL or UL through tdd-UL-DL-ConfigurationCommon or tdd-UL-DL-ConfigurationDedicated; SFI-D/U may be indicated as DL or UL through an SFI in the DCI format 2-0.

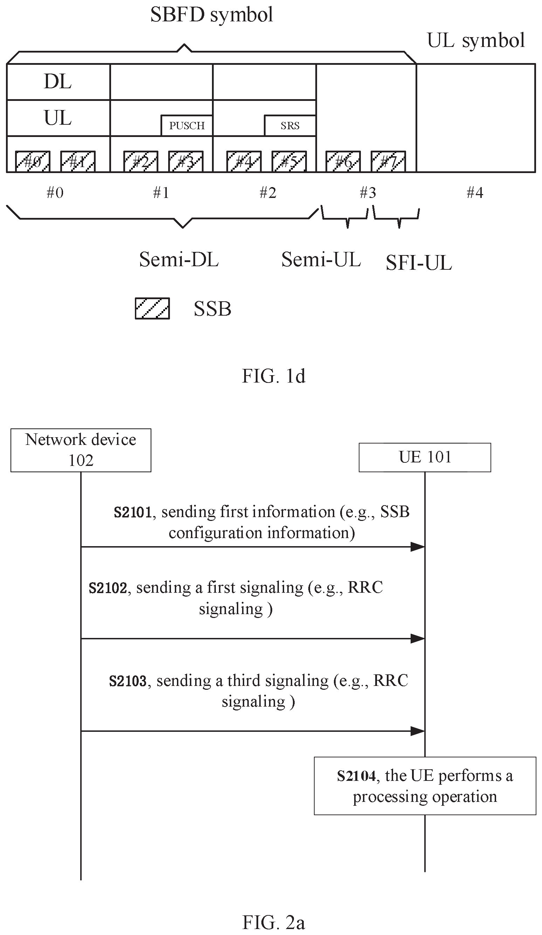

**In** some embodiments, with reference to FIG. 1d, for method 1, OS#0~6 (OFDM symbols) in time slot #3 are configured as UL through tdd-UL-DL-ConfigurationCommon or tdd-UL-DL-ConfigurationDedicated, and overlap with the symbol of SSB#6. The UE does not expect this to happen.

In some embodiments, with reference o FIG. 1d, for method 2, OS#7-13 symbols in time slot #3 are indicated as UL through SFI, and overlap with the symbol of SSB#7. The UE does not expect this to happen.

In some embodiments, with reference to FIG. 1d, for method 3, there is transmission of a PUSCH signal in time slot #1, and it overlaps with the symbol where SSB#3 is located, then the UE cancels transmission of the PUSCH; there is transmission of an SRS signal on OS#10~13 in time slot #2, and it overlaps with the symbol where SSB#5 is located (OS#8~11), then the UE cancels transmission of the SRS on OS#10~11.

In some embodiments, the collision handling of the SSB and the SBFD symbol is not considered.

In some embodiments, when a PUSCH, PUCCH or PRACH signal overlaps with the symbol where the SSB is located, transmission of the corresponding PUSCH, PUCCH or PRACH signal is canceled; or when an SRS signal overlaps with the symbol where the SSB is located, transmission of the SRS on the overlapping symbol is canceled, which will cause frequency domain resources of the UL sub-band on the symbol where the SSB is located to be unusable (method 3).

FIG. 2a is a schematic interaction diagram of a communication method according to an embodiment of the present disclosure. As shown in FIG. 2a, an embodiment of the present disclosure relates to a communication method applied in the communication system 100, and the method includes the following steps.

At step S2101, the network device sends first information to the UE.

In some embodiments, the UE receives the first information sent by the network device.

In some embodiments, the UE determines that a resource in a first resource set overlaps with an SBFD time unit.

**In** some embodiments, the network device determines that the resource in the first resource set overlaps with the SBFD time unit.

In some embodiments, the UE may determine, based on a predetermined protocol or obtained configuration information, that the resource in the first resource set can overlap with the SBFD time unit.

For example, before the UE receives the first information, the UE may determine, based on a predetermined protocol or configuration information sent by the network device, that the resource in the first resource set can overlap with the SBFD time unit.

In some embodiments, the network device may determine based on the predetermined protocol that the resource in the first resource set can overlap with the SBFD time unit, or the network device may configure that the resource in the first resource set can overlap with the SBFD time unit.

For example, before the network device sends the first information, the network device may determine based on the predetermined protocol that the resource in the first resource set can overlap with the SBFD time unit, or the network device may configure that the resource in the first resource set can overlap with the SBFD time unit.

In some embodiments, the time unit may be a symbol, a time slot, a subframe, etc., which are not limited here. For example, the time unit is a symbol.

In some embodiments, each time unit corresponds to one time-frequency domain position.

In some embodiments, the first resource set includes at least one first resource.

In some embodiments, each first resource corresponds to one time-frequency domain position.

In some embodiments, the first resource is a time domain resource and/or a frequency domain resource where one or more SSBs are located.

**In** some embodiments, an overlap of resources may be an overlap of time domain resources and/or frequency domain resources.

In some embodiments, the UE receives the configuration information sent by the network device, and the UE determines, according to the configuration information, that the resource in the first resource set can overlap with the SBFD time unit.

In some embodiments, according to a predetermined protocol rule, the UE and the network device determine that resource in the first resource set can overlap with the SBFD time unit.

In some embodiments, the first information is used to determine the first resource set.

In some embodiments, a time domain position of the resource in the first resource set overlaps with the SBFD time unit.

In some embodiments, the first information is SSB configuration information.

In some embodiments, the UE determines a time-frequency domain position of the SSB within a configuration cycle of the SSB configuration information.

In some embodiments, the UE may determine the time-frequency domain position of an actually received SSB based on the first information.

At step S2102, the network device sends a first signaling to the UE.

In some embodiments, the UE receives the first signaling sent by the network device.

In some embodiments, the UE receives the first signaling sent by the network device, in which the first signaling indicates that a DL time unit is configured as the SBFD time unit.

For example, the DL symbol is configured as an SBFD symbol through a semi-static signaling or dynamically indicated as an SBFD symbol.

For example, the DL symbol may be configured through a tdd-UL-DL-ConfigurationCommon signaling.

For example, the DL symbol may be configured through a tdd-UL-DL-ConfigurationDedicated signaling.

For example, the DL symbol may be dynamically indicated through a DCI format 2-0 signaling.

In some embodiments, the UE does not expect that an SBFD time unit included in the first resource is configured as a UL time unit.

For example, the UE does not expect an SBFD symbol included in the symbol where the SSB is located to be configured as a UL symbol.

In some embodiments, the UE does not expect the first resource to include an SBFD time unit and a non-SBFD time unit.

For example, one SSB transmission cannot span SBFD and non-SBFD symbols.

For example, the UE does not expect that one symbol where the SSB is located contains both SBFD and non-SBFD symbols.

In some embodiments, the UE does not expect to receive a second signaling, in which the second signaling is used to configure the SBFD time unit included in the first resource as a UL time unit. In this way, the situation where the SSB cannot be received after the SBFD is configured as a UL time unit may be reduced, and the SSB may be received on the SBFD.

In some embodiments, it is not expected that a frequency domain resource of the first resource overlaps with the SBFD time unit outside the DL transmission frequency domain range.

In some embodiments, it is determined that the first resource includes the SBFD time unit, and it is not expected that the frequency domain resource of the first resource overlaps with the SBFD time unit outside the DL transmission frequency domain range.

In some embodiments, when the symbol where the SSB is located includes an SBFD symbol, the UE does not expect a frequency domain range of the SSB to overlap with the SBFD symbol outside the DL transmission frequency domain range.

In some embodiments, the first signaling is a semi-static signaling or a dynamic signaling, and/or the second signaling is a semi-static signaling or a dynamic signaling.

In some embodiments, the semi-static signaling is an SBFD symbol configuration signaling.

In some embodiments, the dynamic signaling is a DCI signaling.

For example, see 2b, in one time slot, the first SSB uses OS#2~5 (such as SSB#0, 2, 4, 6), and the second SSB uses OS#8~11 (such as SSB#1, 3, 5, 7). For example, the UE does not expect OS#2~5 in time slot #3, and the SBFD symbols in OS#8~11 are statically configured as UL or dynamically indicated as UL. It should be noted that if the SBFD symbol is configured as UL, there is no DL symbol that can be used for receiving the SSB in the corresponding time slot. In the present disclosure, since the UE does not expect to receive the second signaling, the network device may not configure the SBFD as UL through the second signaling, so that the UE can receive the SSB on the SBFD. For example, the UE does not expect the SSB in the SBFD symbol to overlap with the SBFD symbol outside the DL transmission frequency domain range, such as not expecting SSB#1~7 to overlap with the SBFD symbol outside the DL transmission frequency domain range.

It should be noted that the execution order of step S2101 and step S2102 is not limited, and step S2101 may be executed first, or step S2102 may be executed first. Of course, the configuration signaling of the first information in step S2101 may also be the first signaling in step S2102, that is, step S2101 and step S2102 may be implemented by the same signaling, for example, RRC signaling.

At step S2103, the network device sends a signaling to the UE.

In some embodiments, the network device sends a third signaling to the UE, in which the third signaling is used to configure a first type of SSB.

In some embodiments, the network device sends a fourth signaling to the UE, in which the fourth signaling is used to configure a second type of SSB.

In some embodiments, the third signaling and the fourth signaling are the same signaling or different signalings.

In some embodiments, the first type of SSB and the second type of SSB among the SSBs are determined.

In some embodiments, the first type of SSB is an SSB actually received among the SSBs.

In some embodiments, the second type of SSB is an SSB among the SSBs except the first type of SSB.

In some embodiments, the SSB set includes at least two SSBs, which may be referred to as nominal SSBs.

In some embodiments, an SSB used for actual reception in the SSB set is called an actual SSB.

In some embodiments, an SSB other than the actual SSB in the SSB set is referred to as a non-actual SSB.

In some embodiments, the third signaling is received, in which the third signaling is used to configure the nominal SSB. For example, the nominal SSB is configured via an information element ssb-PositionsInBurst.

In some embodiments, the third signaling is received, in which the third signaling is used to configure the first type of SSB.

In some embodiments, the fourth signaling is received, the fourth signaling is used to configure the second type of SSB. For example, the actual SSB is configured via an information element SSB-MTC and ssb-ToMeasure.

At step S2104, the UE performs a processing operation.

In some embodiments, for the first type of SSB, it is determined that the first resource overlaps with a time unit for transmitting a UL signal, and sending of the UL signal is canceled.

In some embodiments, for the first type of SSB, it is determined that the first resource overlaps with a time unit for transmitting a UL signal, and the sending of the UL signal may be canceled in a first manner.

In some embodiments, the first manner may be that: the symbol where the SSB is located overlaps with the symbol where the UL signal is located, and transmission of the PUSCH, PUCCH and/or PRACH signal is canceled or transmission of the SRS signal on the overlapping symbol is canceled.

In some embodiments, for the first type of SSB, it is determined that a time unit where the first resource is located is an SBFD time unit, and the first resource overlaps with a time unit for sending a UL signal, then the UL signal is sent.

In some embodiments, for the first type of SSB, it is determined that a time unit where the first resource is located is an SBFD time unit, and the first resource overlaps with a time unit for sending a UL signal, then the UL signal may be sent in a second manner.

In some embodiments, the second manner may be that: it is determined that the time unit where the first resource is located is an SBFD time unit, and the first resource overlaps with the time unit for sending a UL signal, the PUSCH, PUCCH and/or PRACH signal or the SRS signal on the overlapping symbol is sent.

In some embodiments, the UL signal includes at least one of:
a physical uplink shared channel (PUSCH) signal;
a physical uplink control channel (PUCCH) signal;
a physical random access channel (PRACH) signal; or
a sounding reference signal (SRS).

In some embodiments, for the second type of SSB, it is determined that the time unit where the first resource is located is an SBFD time unit, and the first resource overlaps with the time unit for sending a UL signal, then the UL signal is sent.

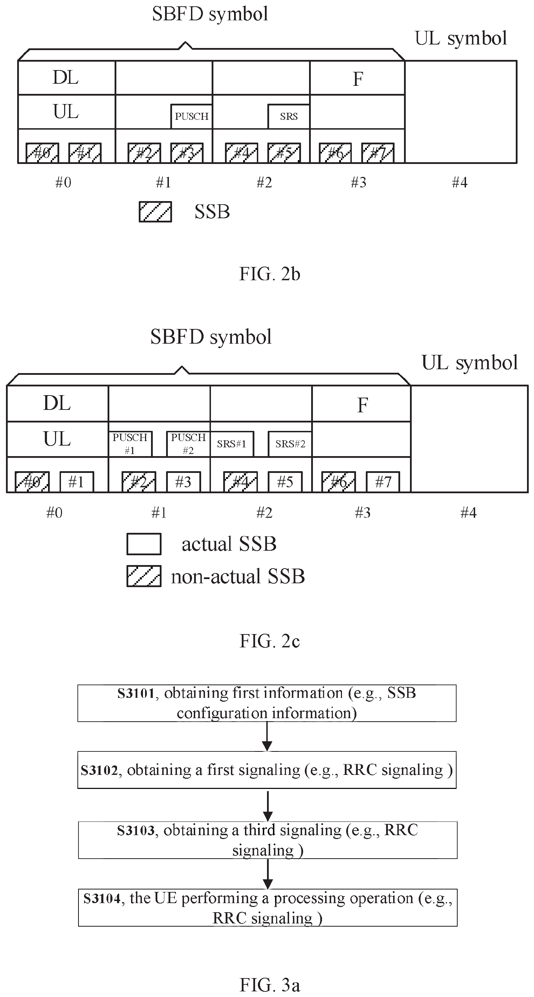

For example, with reference to FIG. 2c, in one time slot, the first SSB uses OS#2~5 (such as SSB#0, 2, 4, 6), the second SSB uses OS#8~11 (such as SSB#1, 3, 5, 7), PUSCH#1 and SRS#1 use OS#0~3, and PUSCH#2 and SRS#2 use OS#10~13.

For example, for the first type of SSBs, corresponding to SSBs #3 and #5 in FIG. 2c, transmission of PUSCH #2 is canceled, and transmission of SRS #2 on OS #10 to 11 is canceled.

For example, for the first type of SSBs, corresponding to SSBs #3 and #5 in FIG. 2c, PUSCH #2 and SRS #2 are sent on OS #10 to 13.

For example, for the second type of SSBs, corresponding to SSBs #2 and #4 in FIG. 2c, PUSCH #1 and SRS #1 are sent on OS #0~3.

In some embodiments, the time unit where the first resource is located is SBFD, and the first resource overlaps with the time unit for sending a UL signal, the UL signal is sent.

In some embodiments, sending the UL signal includes: sending the UL signal based on a priority of the UL signal.

For example, with reference to FIG. 2c again, when PUSCH#2 is a high priority UL signal, PUSCH#2 is sent on OS#10-13; when SRS#2 is a high priority UL signal, SRS#2 is sent on OS#10-13.

For example, with reference to FIG. 2c again, when PUSCH#1 is a high priority UL signal, PUSCH#1 is sent on OS#0-3; when SRS#1 is a high priority UL signal, SRS#1 is sent on OS#0-3.

In some embodiments, sending the UL signal based on the priority of the UL signal includes:
sending a UL signal with a high priority, in which the UL signal with the high priority includes at least one of:
a UL signal indicated by DCI; or
a UL ultra-reliable and low-latency communication (URLLC) signal.

In some embodiments, cancelling sending the UL signal may be cancelling sending a low priority UL signal.

In some embodiments, for multiple PUSCH transmissions indicated by one DCI, the high priority UL signal refers to the first PUSCH transmission, including at least one of:
a dynamic grant (DG)-PUSCH repetition type A (with or without available slot counting);
Type 2 configured grant (CG) - PUSCH repetition type A (with or without available slot counting);
Type 2CG-PUSCH without repetition;
multiple PUSCHs scheduled by a single DCI; or
TBoMS with or without repetition.

In some embodiments, the term "information" can be interchangeably with terms such as "message", "signal", "signaling", "report", "configuration", "indication", "instruction", "command", "channel", "parameter", "domain", "field", and "data".

In some embodiments, the term "send" can be interchangeable with terms such as "transmit", "report", and "transmit".

The information indication method involved in the embodiment of the present disclosure may include at least one of steps S2101 to S2104. For example, step S2101 may be implemented as an independent embodiment, step S2102 may be implemented as an independent embodiment, step S2103 may be implemented as an independent embodiment, and step S2104 may be implemented as an independent embodiment. For example, step S2101 combined with step S2104 may be implemented as an independent embodiment, step S2102 combined with step S2104 may be implemented as an independent embodiment, and step S2103 combined with step S2104 may be implemented as an independent embodiment, but the present disclosure is not limited thereto.

FIG. 3a is a flowchart illustrating a communication method according to an embodiment of the present disclosure. As shown in FIG. 3a, an embodiment of the present disclosure relates to a communication method performed by a UE 101, and the method includes the following steps.

At step S3101, first information is obtained.

Regarding an optional implementation of step S3101, reference may be made to the optional implementation of step S2101 in FIG. 2a and other related parts of the embodiment involved in FIG. 2a, which will not be repeated in detail here.

In some embodiments, the UE receives the first information sent by a network device, but the present disclosure is not limited thereto and the UE may also receive the first information sent by other entities.

In some embodiments, the UE obtains the first information specified by a protocol.

In some embodiments, the UE obtains the first information from an upper layer(s).

In some embodiments, the UE performs processing to obtain the first information.

In some embodiments, step S3101 is omitted, the UE autonomously implements the function indicated by the first information, or the above function is default or preset.

In some embodiments, the UE may determine, based on a predetermined protocol or acquired configuration information, that a resource in a first resource set can overlap with an SBFD time unit.

For example, before the UE receives the first information, the UE may determine, based on the predetermined protocol or the configuration information sent by the network device, that the resource in the first resource set can overlap with the SBFD time unit.

At step S3102, a first signaling is obtained.

Regarding an optional implementation of step S3102, reference may be made to the optional implementation of step S2102 in FIG. 2a and other related parts of the embodiment involved in FIG. 2a, which will not be repeated in detail here.

In some embodiments, the UE receives the first signaling sent by the network device, but the present disclosure is not limited thereto and the UE may also receive the first signaling sent by other entities.

In some embodiments, the UE obtains the first signaling specified by a protocol.

In some embodiments, the UE obtains the first signaling from an upper layer(s).

In some embodiments, step S3102 is omitted, the UE autonomously implements the function indicated by the first signaling, or the above function is default or preset.

At step S3103, a third signaling is obtained.

Regarding an optional implementation of step S3103, reference may be made to the optional implementation of step S2103 in FIG. 2a and other related parts of the embodiment involved in FIG. 2a, which will not be repeated in detail here.

**In** some embodiments, the UE receives the third signaling sent by the network device, but the present disclosure is not limited thereto and the UE may also receive the third signaling sent by other entities.

**In** some embodiments, the UE obtains the third signaling specified by a protocol.

In some embodiments, the UE obtains the third signaling from an upper layer(s).

In some embodiments, step S3103 is omitted, the UE autonomously implements the function indicated by the third signaling, or the above function is default or preset.

At step S3104, the UE performs a processing operation.

Regarding an optional implementation of step S3104, reference may be made to the optional implementation of step S2104 in FIG. 2a and other related parts of the embodiment involved in FIG. 2a, which will not be repeated in detail here.

The information indication method involved in the embodiments of the present disclosure may include at least one of steps S3101 to S3104. For example, step S3101 may be implemented as an independent embodiment, step S3102 may be implemented as an independent embodiment, step S3103 may be implemented as an independent embodiment, and step S3104 may be implemented as an independent embodiment. For example, step S3101 combined with step S3104 may be implemented as an independent embodiment, step S3102 combined with step S3104 may be implemented as an independent embodiment, and step S3103 combined with step S3104 may be implemented as an independent embodiment, but the present disclosure is not limited thereto.

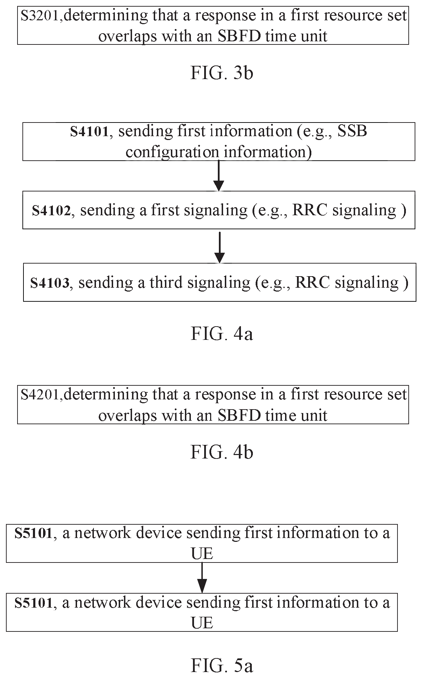

FIG. 3b is a flowchart illustrating a communication method according to an embodiment of the present disclosure. As shown in FIG. 3b, an embodiment of the present disclosure relates to a communication method performed by a UE 101, and the method includes the following steps.

At step S3201, it is determined that a response in a first resource set overlaps with an SBFD time unit.

In some embodiments, the first resource set includes at least one first resource. The first resource is a time domain resource and/or a frequency domain resource where one or more SSBs are located.

**In** some embodiments, regarding an optional implementation of step S3201, reference may be made to the optional implementation of step S2101 in FIG. 2a, and other related parts of the embodiment involved in FIG. 2a, which will not be repeated in detail here.

In some embodiments, the method further includes at least one of:
determining, according to a predetermined protocol, that the resource in the first resource set can overlap with the SBFD time unit; or
receiving configuration information, and determining, according to the configuration information, that the resource in the first resource set can overlap with the SBFD time unit.

In some embodiments, the method further includes:
receiving a first message;
in which the first information is used to determine the first resource set, and a time domain position of the resource in the first resource set overlaps with the SBFD time unit.

In some embodiments, the method includes:
receiving a first signaling, in which the first signaling indicates that a DL time unit is configured as the SBFD time unit.

In some embodiments, the method further receiving at least one of:
not expecting that an SBFD time unit included in the first resource is configured as a UL time unit; or
not expecting that the first resource includes an SBFD time unit and a non-SBFD time unit.

In some embodiments, not expecting that the SBFD time unit included in the first resource is configured as the UL time unit includes:
not expecting to receive a second signaling; in which the second signaling is used to configure the SBFD time unit included in the first resource as the UL time unit.

In some embodiments, the method further includes:
not expecting that a frequency domain resource of the first resource overlaps with the SBFD time unit outside a DL transmission frequency domain range.

In some embodiments, not expecting that the frequency domain resource of the first resource overlaps with the SBFD time unit outside the DL transmission frequency domain range includes:
determining that the first resource includes the SBFD time unit, and not expecting that the frequency domain resource of the first resource overlaps with the SBFD time unit outside the DL transmission frequency domain range.

In some embodiments, the first signaling is a semi-static signaling or a dynamic signaling, and/or the second signaling is a semi-static signaling or a dynamic signaling.

In some embodiments, the semi-static signaling is an SBFD symbol configuration signaling.

In some embodiments, the dynamic signaling is a DCI signaling.

In some embodiments, the method includes:
determining a first type of SSB and a second type of SSB in the one or more SSBs;
in which, the first type of SSB is an SSB actually received among the one or more SSBs; the second type of SSB is an SSB among the SSBs except the first type of SSB.

In some embodiments, the method further includes at least one of:
receiving a third signaling, in which the third signaling is used to configure the first type of SSB; or
receiving a fourth signaling, in which the fourth signaling is used to configure the second type of SSB;
in which the third signaling and the fourth signaling are the same signaling or different signalings.

In some embodiments, for the first type of SSB, the method further includes one of:
determining that the first resource overlaps with a time unit for transmitting a UL signal, and cancelling sending the UL signal;
determining that a time unit where the first resource is located is an SBFD time unit and that the first resource overlaps with a time unit for sending a UL signal, and sending the UL signal.

In some embodiments, the UL signal includes at least one of:
a PUSCH signal;
a PUCCH signal;
a PRACH signal; or
an SRS.

In some embodiments, for the second type of SSB, the method further includes:
determining that the time unit where the first resource is located is an SBFD time unit and that the first resource overlaps with the time unit for sending a UL signal, and sending the UL signal.

In some embodiments, the method further includes:
determining that the time unit where the first resource is located is SBFD and that the first resource overlaps with the time unit for sending a UL signal, sending the UL signal.

In some embodiments, sending the UL signal includes:
sending the UL signal based on a priority of the UL signal.

In some embodiments, sending the UL signal based on the priority of the UL signal includes:
sending a UL signal with a high priority, in which the UL signal with the high priority includes at least one of:
a UL signal indicated by DCI; or
a UL URLLC signal.

In some embodiments, the UE may determine, based on a predetermined protocol or acquired configuration information, that the resource in the first resource set can overlap with the SBFD time unit.

For example, before the UE receives the first information, the UE may determine, based on the predetermined protocol or the configuration information sent by the network device, that resource in the first resource set can overlap with the SBFD time unit.

FIG. 4a is a flowchart illustrating a communication method according to an embodiment of the present disclosure. As shown in FIG. 4a, an embodiment of the present disclosure relates to a communication method performed by a network device 102, and the method includes the following steps.

At step S4101, first information is sent.

Regarding an optional implementation of step S4101, reference may be made to the optional implementation of step S2101 in FIG. 2a and other related parts of the embodiment involved in FIG. 2a, which will not be repeated in detail here.

In some embodiments, the network device may determine, based on a predetermined protocol, that a resource in a first resource set can overlap with an SBFD time unit; or the network device may configure that a resource in a first resource set can overlap with an SBFD time unit.

For example, before the network device sends the first information, the network device may determine, based on the predetermined protocol, that the resource in the first resource set can overlap with the SBFD time unit; or the network device may configure that the resource in the first resource set can overlap with the SBFD time unit.

At step S4102, a first signaling is sent.

Regarding an optional implementation of step S4102, reference may be made to the optional implementation of step S2102 in FIG. 2a and other related parts of the embodiment involved in FIG. 2a, which will not be repeated in detail here.

At step S4103, a third signaling is sent.

Regarding an optional implementation of step S4103, reference may be made to the optional implementation of step S2103 in FIG. 2a and other related parts of the embodiment involved in FIG. 2a, which will not be repeated in detail here.

The information indication method involved in the embodiment of the present disclosure may include at least one of steps S4101 to S4103. For example, step S4101 may be implemented as an independent embodiment, step S4102 may be implemented as an independent embodiment, and step S4103 may be implemented as an independent embodiment. For example, step S4101 combined with step S4102 may be implemented as an independent embodiment, step S4102 combined with step S4103 may be implemented as an independent embodiment, and step S4101 combined with step S4103 may be implemented as an independent embodiment, but the present disclosure is not limited thereto.

FIG. 4b is a flowchart illustrating a communication method according to an embodiment of the present disclosure. As shown in FIG. 4b, an embodiment of the present disclosure relates to a communication method performed by a network device 102, and the method includes the following steps.

At step S4201, it is determined that a response in a first resource set overlaps with an SBFD time unit.

In some embodiments, the first resource set includes at least one first resource. The first resource is a time domain resource and/or a frequency domain resource where one or more SSBs are located.

**In** some embodiments, regarding an optional implementation of step S4201, reference may be made to the optional implementation of step S2101 in FIG. 2a, and other related parts of the embodiment involved in FIG. 2a, which will not be repeated in detail here.

In some embodiments, the method further includes:
sending configuration information;
in which the configuration information is used for the UE to determine that the resource in the first resource set can overlap with the SBFD time unit.

In some embodiments, the method further includes:
sending a first message;
in which the first information is used to determine the first resource set, and a time domain position of the resource in the first resource set overlaps with the SBFD time unit.

In some embodiments, the method includes:
sending a first signaling, in which the first signaling indicates that a DL time unit is configured as the SBFD time unit.

In some embodiments, the first signaling is a semi-static signaling or a dynamic signaling.

In some embodiments, the semi-static signaling is an SBFD symbol configuration signaling.

In some embodiments, the dynamic signaling is a DCI signaling.

In some embodiments, the method further includes at least one of:
sending a third signaling, in which the third signaling is used to configure a first type of SSB; or
sending a fourth signaling, in which the fourth signaling is used to configure a second type of SSB;
in which the third signaling and the fourth signaling are the same signaling or different signalings.

In some embodiments, the network device may determine, based on a predetermined protocol, that the resource in the first resource set can overlap with the SBFD time unit; or the network device may configure that the resource in the first resource set can overlap with the SBFD time unit.

For example, before the network device sends the first information, the network device may determine, based on the predetermined protocol, that resource in the first resource set can overlap with the SBFD time unit; or the network device may configure that the resource in the first resource set can overlap with the SBFD time unit.

FIG. 5a is a flowchart illustrating a communication method according to an embodiment of the present disclosure. As shown in FIG. 5a, an embodiment of the present disclosure relates to a communication method performed by a communication system, and the method includes the following steps.

At step S5101, a network device sends first information to a UE, in which the first information is used for the UE to determine that a resource in a first resource set overlaps with an SBFD time unit.

At step S5102, the UE receives the first information.

**In** some embodiments, regarding an optional implementation of step S5101, reference may be made to the optional implementation of step S2101 in FIG. 2a and other related parts of the embodiment involved in FIG. 2a, which will not be repeated in detail here.

In order to better understand the embodiments of the present disclosure, the technical solution of the present disclosure is further described below through an example embodiment.

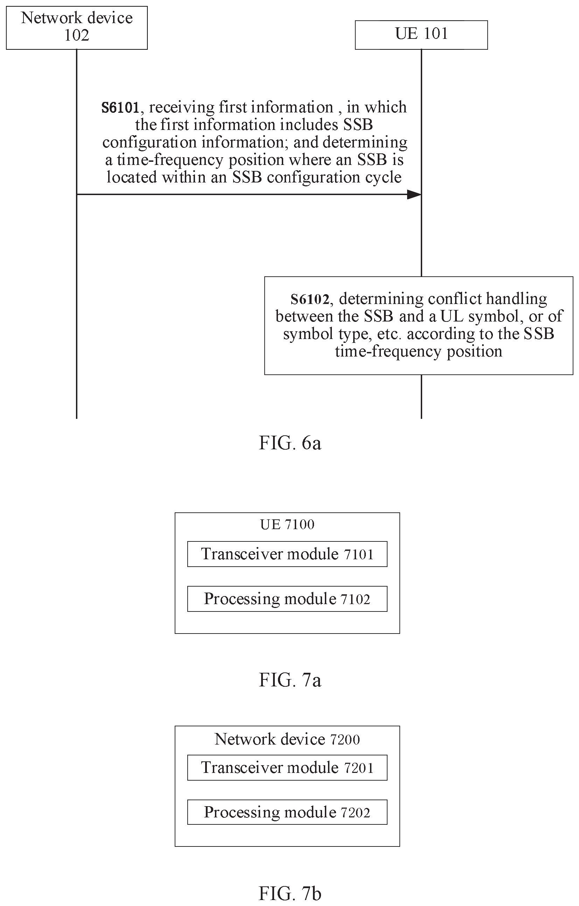

FIG. 6a is a flowchart illustrating a communication method according to an embodiment of the present disclosure. As shown in FIG. 6a, an embodiment of the present disclosure relates to a communication method performed by a communication system, and the method includes the following steps.

At step S6101, first information is received, in which the first information includes SSB configuration information; and a time-frequency position where an SSB is located within an SSB configuration cycle is determined based on the SSB configuration information.

In an embodiment, the first configuration information may be used to determine a time-frequency position of an actually received SSB.

At step S6102, conflict handling between the SSB and a UL symbol, or of symbol type, etc. is determined according to the SSB time-frequency position.

In some embodiments, solution 1 is provided: symbol direction configuration and conflict update of the SSB.

In some embodiments, solution 1-1 is provided.

In some embodiments, the time domain:
for example, the DL symbol is configured through tdd-UL-DL-ConfigurationCommon;
for example, the DL symbol is configured through tdd-UL-DL-ConfigurationDedicated;
for example, the DL symbol is indicated by DCI format 2-0.

For example, the UE does not expect the symbol where the SSB is located, and the dynamic signaling indicates that one SBFD symbol is a UL symbol.

For example, the UE does not expect the symbol where the SSB is located, and semi-static signaling configures one SBFD symbol as a UL symbol.

In some embodiments, one SSB transmission may not span SBFD and non-SBFD symbols.

In some embodiments, the UE does not expect the symbols where one SSB is located to contain both SBFD and non-SBFD symbols.

In some embodiments, the frequency domain:
for example, when the symbol where the SSB is located includes an SBFD symbol, it is not expected that a frequency domain range of the SSB overlaps with the SBFD symbol outside the DL transmission frequency domain range.

For example, the SBFD symbol is configured via a semi-static signaling and/or indicated via a dynamic signaling.

For example, referring to FIG. 2b, in one time slot, the first SSB uses OS#2 to 5 (such as SSB#0, 2, 4, 6), and the second SSB uses OS#8 to 11 (such as SSB#1, 3, 5, 7).

For example, the UE does not expect the SBFD symbols on OS#2-5 and OS#8-11 in time slot #3 to be statically configured as UL or dynamically indicated as UL.

□ For example, the UE does not expect the SSB in the SBFD symbol to overlap with the SBFD symbol outside the DL transmission frequency domain, such as the UE does not expect SSB#1-7 to overlap with the SBFD symbol outside the DL transmission frequency domain.

In some embodiments, solution 2 is provided: conflict between a UL signal and an SSB.

**In** some embodiments, solution 2-1 is provided: the SSB actually received (which may be referred to as the actual SSB) in the SSB set (which may be referred to as the nominal SSB) is configured, and the SSB other than the actual SSB in the nominal SSBs is a non-actual SSB:

In some embodiments, the actual SSB is configured.

For example, the symbol where the actual SSB is located overlaps with the UL signal, and transmission of the UL signal is canceled in the first manner.

For example, the symbol where the actual SSB is located is SBFD, and the symbol where the actual SSB is located overlaps with the UL signal.

For example, the UE may send a UL signal.

For example, the UE may send a high priority UL signal.

In an embodiment, for the non-actual SSB, the symbol where the non-actual SSB is located is SBFD, and the symbol where the non-actual SSB is located overlaps with the UL signal.

For example, the UE may send a UL signal.

For example, the UE may send a high priority UL signal.

In some embodiments, the nominal SSB is configured via the information element ssb-PositionsInBurst, and the actual SSB is configured via the information element SSB-MTC and ssb-ToMeasure.

In some embodiments, the first manner is that: the symbol where the SSB is located overlaps with the UL signal, and transmission of the PUSCH, PUCCH and/or PRACH signal is canceled or transmission of the SRS signal on the overlapping symbol is canceled.

With reference to FIG. 2c, in one time slot, the first SSB uses OS#2~5 (such as SSB#0,2,4,6), the second SSB uses OS#8~11 (such as SSB#1,3,5,7), PUSCH#1 and SRS#1 use OS#0~3, and PUSCH#2 and SRS#2 use OS#10~13.

For example, transmission of PUSCH#2 is canceled, and transmission of SRS#2 on OS#10-11 is canceled.

For example, PUSCH#2 and SRS#2 are transmitted on OS#10-13.

For example, when PUSCH#2 is a high priority UL signal, PUSCH#2 is sent on OS#10-13; when SRS#2 is a high priority UL signal, SRS#2 is sent on OS#10-13.

For example, PUSCH#1 and SRS#1 are transmitted on OS#0-3.

For example, when PUSCH#1 is a high priority UL signal, PUSCH#1 is transmitted on OS#0-3; when SRS#1 is a high priority UL signal, SRS#1 is transmitted on OS#0-3.

In some embodiments, solution 2-2 is provided: the symbol where the SSB is located is SBFD, and the symbol where the SSB is located overlaps with the UL signal.

For example, the UE may send a UL signal.

For example, the UE may send a high priority UL signal.

In some embodiments, the high priority UL signal includes:
a UL signal indicated by DCI; or
a UL URLLC signal.

In an embodiment, for multiple PUSCH transmissions indicated by one DCI, the high priority UL signal refers to the first PUSCH transmission, including at least one of the following:
DG-PUSCH repetition type A with/without available slot counting;
Type 2 CG-PUSCH repetition type A with/without available slot counting;
Type 2 CG-PUSCH without repetition;
multiple PUSCHs scheduled by single DCI; or
TBoMS with/without repetition.

In the embodiments of the present disclosure, part or all of the steps and their optional implementations may be arbitrarily combined with part or all of the steps in other embodiments, or may be arbitrarily combined with optional implementations of other embodiments.

In the embodiments of the present disclosure, part or all of the steps and their optional implementations may be arbitrarily combined with part or all of the steps in other embodiments, or may be arbitrarily combined with optional implementations of other embodiments.

The embodiments of the present disclosure are implemented for passive IoT terminals. Different terminal types and different capacitor sizes will affect the terminal's data transmission capability and the interval between data transmissions. The embodiments of the present disclosure define the terminal's data transmission capability and reports it to the network side, assisting the network side to effectively trigger the terminal to report data.

The embodiments of the present disclosure also propose an apparatus for implementing any of the above methods, for example, an apparatus is proposed, the above apparatus includes units or modules for implementing various steps performed by the terminal in any of the above methods. For another example, another apparatus is proposed, including units or modules for implementing various steps performed by the network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of processor calling software, or in the form of a hardware circuit, or in part by processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 7a is a schematic diagram of a UE proposed in an embodiment of the present disclosure. As shown in FIG. 7a, the UE 7100 includes at least one of a transceiver module 7101 or a processing module 7102 etc. In some embodiments, the transceiver module 7101 is configured to receive first information. Optionally, the transceiver module 7101 is used to execute at least one of the communication steps (for example, step S2102, step S2103, which are not limited here) related to "receiving and/or sending" performed by the UE 101 in any of the above methods, which will not be repeated here. Optionally, the processing module 7102 is used to execute at least one of other steps (for example, step S2101) performed by the UE 101 in any of the above methods, which will not be repeated here.

FIG. 7b is a schematic diagram of a UE proposed in an embodiment of the present disclosure. As shown in FIG. 7b, the network device 7200 includes at least one of a transceiver module 7201 or a processing module 7202 etc. In some embodiments, the transceiver module 7201 is configured to receive first information. Optionally, the transceiver module 7201 is used to execute at least one of communication steps (for example, step S2102, step S2013, which are not limited here) related to "receiving and/or sending" performed by the network device 102 in any of the above methods, which will not be repeated here. Optionally, the processing module is used to execute at least one of other steps (for example, step S2101) performed by the network device 102 in any of the above methods, which will not be repeated here.

In some embodiments, the processing module may be one module or include multiple submodules. Optionally, the multiple submodules respectively execute all or part of the steps required to be executed by the processing module. Optionally, the processing module may be replaced with the processor.

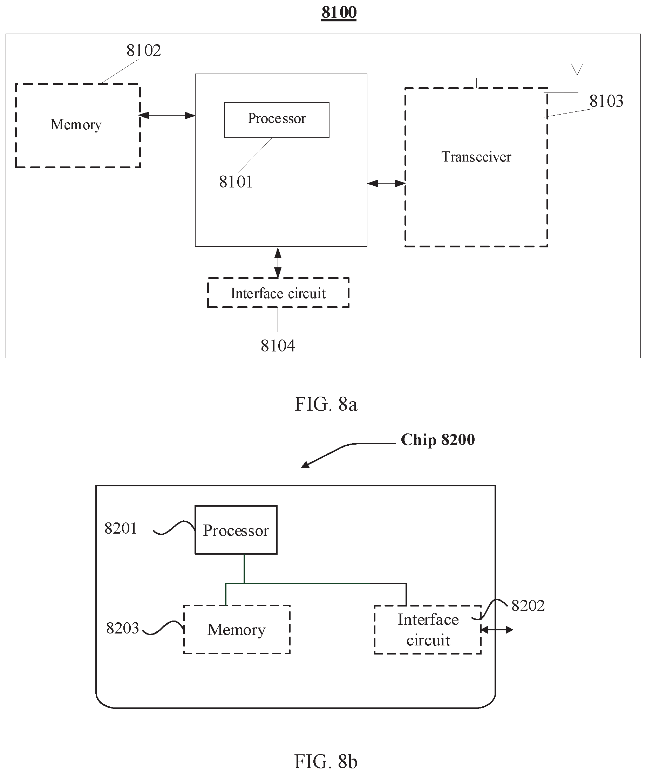

FIG. 8a is a schematic diagram of a communication device 8100 proposed in an embodiment of the present disclosure. The communication device 8100 may be a network device (e.g., the access network device, the core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 8100 may be used to implement the method described in the above method embodiments, and for details, reference may be made to the description in the above method embodiments.

**As** shown in FIG. 8a, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The communication device 8100 executes any of the above methods.

In some embodiments, the communication device 8100 further includes one or more memories 8102 for storing instructions. Optionally, all or part of the memory 8102 may be outside the communication device 8100.

In some embodiments, the communication device 8100 further includes one or more transceivers 8103. When the communication device 8100 includes one or more transceivers 8103, at least one of the communication steps (for example, step S2101, step S2102, which is not limited here) such as sending and/or receiving in the above methods is performed by the transceiver 8103, and at least one of the other steps (for example, step S2101) is performed by the processor 8101.

In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In some embodiments, the communication device 8100 further includes one or more interface circuits 8104, which are connected to the memory 8102. Optionally, the interface circuit 8104 may be used to receive signals from the memory 8102 or other apparatuses, and may be used to send signals to the memory 8102 or other apparatuses. For example, the interface circuit 8104 may read instructions stored in the memory 8102 and send the instructions to the processor 8101.

The communication device 8100 described in the above embodiments may be the network device, or the UE, but the scope of the communication device 8100 described in the present disclosure is not limited thereto, and the structure of the communication device 8100 may not be limited by FIG. 8a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 8B is a schematic diagram of a chip 8200 proposed in an embodiment of the present disclosure. In case where the communication device 8100 may be a chip or a chip system, reference may be made to the schematic diagram of the chip 8200 shown in FIG. 8b, but the present disclosure is not limited thereto.

The chip 8200 includes one or more processors 8201, and the chip 8200 is used to execute any of the above methods.

In some embodiments, the chip 8200 further includes one or more interface circuits 8202, which are connected to the memory 8203. Optionally, the interface circuit 8202 may be used to receive signals from the memory 8203 or other apparatuses, and the interface circuit 8202 may be used to send signals to the memory 8203 or other apparatuses. For example, the interface circuit 8202 may read instructions stored in the memory 8203 and send the instructions to the processor 8201.

In some embodiments, the interface circuit 8202 executes at least one of the communication steps (for example step S2101, step S3101, which is not limited here) such as sending and/or receiving in the above methods, and the processor 8201 executes at least one of the other steps (for example step S2101, step S2102, which is not limited here).

In some embodiments, the terms such as "interface circuit", "interface", "transceiver pin", and "transceiver" may be exchangeable with each other.

In some embodiments, the chip 8200 further includes one or more memories 8203 for storing instructions. Optionally, all or part of the memory 8203 may be outside the chip 8200.

The present disclosure also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 8100, enables the communication device 8100 to execute any of the above methods. Optionally, the program product is a computer program product.

The present disclosure also proposes a computer program, which, when executed on a computer, causes the computer to execute any one of the above methods.

## Claims

1. A communication method, performed by a user equipment (UE), comprising:
determining that a resource in a first resource set overlaps with a sub-band full duplex (SBFD) time unit;
wherein the first resource set comprises at least one first resource, and the at least one first resource is a time domain resource and/or a frequency domain resource where one or more synchronization signal and physical broadcast channel blocks (SSBs) are located.

2. The method of claim 1, further comprising at least one of:
determining, according to a predetermined protocol, that the resource in the first resource set is capable of overlapping with the SBFD time unit; or
receiving configuration information, and determining, according to the configuration information, that the resource in the first resource set is capable of overlapping with the SBFD time unit.

3. The method of claim 1, further comprising:
receiving first information;
wherein the first information is configured to determine the first resource set, and a time domain position of the resource in the first resource set overlaps with the SBFD time unit.

4. The method of claim 1, further comprising:
receiving a first signaling, wherein the first signaling indicates that a downlink (DL) time unit is configured as the SBFD time unit.

5. The method of claim 1, further comprising at least one of:
not expecting that the SBFD time unit comprised in the at least one first resource is configured as an uplink (UL) time unit; or
not expecting that the at least one first resource comprises the SBFD time unit and a non-SBFD time unit.

6. The method of claim 5, wherein not expecting that the SBFD time unit comprised in the at least one first resource is configured as the UL time unit comprises:
not expecting to receive a second signaling, wherein the second signaling is used to configure the SBFD time unit comprised in the at least one first resource as the UL time unit.

7. The method of claim 1, further comprising:
not expecting that a frequency domain resource of the at least one first resource overlaps with the SBFD time unit outside a DL transmission frequency domain range.

8. The method of claim 7, wherein not expecting that the frequency domain resource of the at least one first resource overlaps with the SBFD time unit outside the DL transmission frequency domain range comprises:
determining that the at least one first resource comprises the SBFD time unit, and not expecting that the frequency domain resource of the at least one first resource overlaps with the SBFD time unit outside the DL transmission frequency domain range.

9. The method of claim 4 or 6, wherein the first signaling is a semi-static signaling or a dynamic signaling, and/or the second signaling is a semi-static signaling or a dynamic signaling.

10. The method of claim 9, wherein the semi-static signaling is an SBFD symbol configuration signaling.

11. The method of claim 10, wherein the dynamic signaling is a downlink control information (DCI) signaling.

12. The method of claim 1, comprising:
determining a first type of SSB and a second type of SSB in the one or more SSBs;
wherein the first type of SSB comprises an SSB actually received among the one or more SSBs, and the second type of SSB comprises an SSB among the one or more SSBs except the first type of SSB.

13. The method of claim 12, further comprising at least one of:
receiving a third signaling, wherein the third signaling is used to configure the first type of SSB; or
receiving a fourth signaling, wherein the fourth signaling is used to configure the second type of SSB;
wherein the third signaling and the fourth signaling are the same signaling or different signalings.

14. The method of claim 12, wherein for the first type of SSB, the method further comprises one of:
determining that the at least one first resource overlaps with a time unit for transmission of a UL signal, and cancelling sending the UL signal; or
determining that a time unit where the at least one first resource is located is the SBFD time unit and that the at least one first resource overlaps with a time unit for sending a UL signal, and sending the UL signal.

15. The method of claim 14, wherein the UL signal comprises at least one of:
a physical uplink shared channel (PUSCH) signal;
a physical uplink control channel (PUCCH) signal;
a physical random access channel (PRACH) signal; or
a sounding reference signal (SRS).

16. The method of claim 12, wherein for the second type of SSB, the method further comprises:
determining that a time unit where the at least one first resource is located is the SBFD time unit and that the at least one first resource overlaps with a time unit for sending a UL signal, and sending the UL signal.

17. The method of claim 1, further comprising:
determining that a time unit where the at least one first resource is located is the SBFD time unit and that the at least one first resource overlaps with a time unit for sending a UL signal, and sending the UL signal.

18. The method of claim 14, 16 or 17, wherein sending the UL signal comprises:
sending the UL signal based on a priority of the UL signal.

19. The method of claim 18, wherein sending the UL signal based on the priority of the UL signal comprises:
sending a UL signal with a high priority, wherein the UL with the high priority comprises at least one of:
a UL signal indicated by DCI; or
a UL ultra-reliable and low-latency communication (URLLC) signal.

20. A communication method, performed by a network device, comprising:
determining that a resource in a first resource set overlaps with a sub-band full duplex (SBFD) time unit;
wherein the first resource set comprises at least one first resource, and the at least one first resource is a time domain resource and/or a frequency domain resource where one or more synchronization signal and physical broadcast channel blocks (SSBs) are located.

21. The method of claim 20, further comprising:
sending configuration information;
wherein the configuration information is used for a user equipment (UE) to determine that the resource in the first resource set is capable of overlapping with the SBFD time unit.

22. The method of claim 21, further comprising:
sending first information;
wherein the first information is configured to determine the first resource set, and a time domain position of the resource in the first resource set overlaps with the SBFD time unit.

23. The method of claim 20, further comprising:
sending a first signaling, wherein the first signaling indicates that a downlink (DL) time unit is configured as the SBFD time unit.

24. The method of claim 23, wherein the first signaling is a semi-static signaling or a dynamic signaling.

25. The method of claim 24, wherein the semi-static signaling is an SBFD symbol configuration signaling.

26. The method of claim 24, wherein the dynamic signaling is a downlink control information (DCI) signaling.

27. The method of claim 20, further comprising at least one of:
sending a third signaling, wherein the third signaling is used to configure a first type of SSB; or
sending a fourth signaling, wherein the fourth signaling is used to configure a second type of SSB;
wherein the third signaling and the fourth signaling are the same signaling or different signalings.

28. A communication method, performed by a communication system, comprising:
sending, by a network device, first information to a user equipment (UE), wherein the first information is used for the UE to determine that a resource in a first resource set overlaps with a sub-band full duplex (SBFD) time unit; and
receiving, by the UE, the first information.

29. A user equipment (UE), comprising:
a processing module, configured to:
determine that a resource in a first resource set overlaps with a sub-band full duplex (SBFD) time unit;
wherein the first resource set comprises at least one first resource, and the at least one first resource is a time domain resource and/or a frequency domain resource where one or more synchronization signal and physical broadcast channel blocks (SSBs) are located.

30. A network device, comprising:
a processing module, configured to:
determine that a resource in a first resource set overlaps with a sub-band full duplex (SBFD) time unit;
wherein the first resource set comprises at least one first resource, and the at least one first resource is a time domain resource and/or a frequency domain resource where one or more synchronization signal and physical broadcast channel blocks (SSBs) are located.

31. A communication system, comprising: a user equipment (UE) and a network device; wherein the UE is configured to perform the information indication method of any one of claims 1 to 19, the network device is configured to perform the communication method of any one of claims 20 to 27.

32. A user equipment (UE), comprising:
one or more processors;
wherein the UE is configured to perform the communication method of any one of claims 1 to 19.

33. A network device, comprising:
one or more processors;
wherein the network device is configured to perform the communication method of any one of claims 20 to 27.

34. A storage medium having instructions stored thereon, wherein when the instructions are executed on a communication device, the communication device is caused to perform the communication method of any one of claims 1 to 19, or any one of claims 20 to 27.
